Europäisches Patentamt

European Patent Office

Office européen des brevets

(11) Numéro de publication: **0 025 767**
**A1**

# DEMANDE DE BREVET EUROPEEN

(21) Numéro de dépôt: **80401318.3**

(51) Int. Cl.³: **H 04 L 1/24**

(22) Date de dépôt: **16.09.80**

(30) Priorité: **18.09.79 FR 7923246**

(43) Date de publication de la demande: **25.03.81**
**Bulletin 81/12**

(84) Etats contractants désignés: **BE DE GB IT NL**

(71) Demandeur: **LIGNES TELEGRAPHIQUES ET TELEPHONIQUES Société anonyme, 1 Rue Charles Bourseul, F-78702 Conflans-Ste Honorine (FR)**

(72) Inventeur: **Gregoire, Michel, "THOMSON-CSF" - SCPI 173, Bld Haussmann, F-75360 Paris Cedex 08 (FR)**
Inventeur: **Vuillemin, Jean-Claude, "THOMSON-CSF" - SCPI 173, Bld Haussmann, F-75360 Paris Cedex 08 (FR)**

(74) Mandataire: **Benoit, Monique et al, "THOMSON-CSF" - SCPI 173, bld Haussmann, F-75360 Paris Cedex 08 (FR)**

(54) **Procédé et dispositif de test automatique d'un système de transmission de données numériques.**

(57) L'invention a pour objet un procédé et un dispositif de test automatique successivement d'un premier modem situé à une extrémité d'une ligne, d'un second modem situé à l'autre extrémité de la ligne et de la ligne elle-même.

Le procédé comporte principalement les étapes suivantes:

— test de la fonction modulation-démodulation du modem choisi comme origine du test, pendant un temps prédéfini (21, 24);

— en cas de mauvais fonctionnement du modem origine, affichage (23, 26) d'une information indiquant la défaillance de ce modem et arrêt du déroulement du test;

— en cas de fonctionnement correct du modem origine, test analogue du modem extrémité (30—41);

— en cas de mauvais fonctionnement du modem extrémité, affichage (35, 40) de la défaillance provoquant l'arrêt du test;

— en cas de fonctionnement correct, test (51) de la ligne de transmission elle-même, dans les deux sens, également pendant une durée prédéfinie, puis affichage (53) des éventuelles erreurs de transmission.

# PROCEDE ET DISPOSITIF DE TEST AUTOMATIQUE D'UN SYSTEME DE TRANSMISSION DE DONNEES NUMERIQUES

La présente invention se rapporte au domaine des transmissions de données numériques et elle a plus particulièrement pour objet un procédé de test automatique d'un système de transmission de données, constitué par au moins deux modems et une ligne de transmission. L'invention a également pour objet un dispositif assurant la mise en oeuvre de ce procédé.

Lorsque l'on désire traiter des informations à distance, il est connu de relier une unité centrale de traitement de données à un ou plusieurs organes périphériques de saisie et de visualisation de ces données, par une voie de transmission, par exemple une ligne téléphonique. Il est connu d'utiliser alors des dispositifs modulateurs démodulateurs de données numériques, ou modems, comme interface entre la voie de transmission de données et les unités de traitement de ces données, à chaque extrémité de la ligne.

En ce qui concerne la maintenance de tels équipements, le faible coût relatif des modems vis-à-vis des systèmes de traitement de données proprement dits pose un problème d'ordre économique au fabricant des modems. En effet, d'une part le non fonctionnement d'une liaison provoque l'immobilisation de matériels coûteux : l'utilisateur du système désire en conséquence un dépannage rapide ; d'autre part les interventions rapides pour la vérification des liaisons sont financièrement très lourdes pour le fabricant de modems vis-à-vis du prix du matériel fabriqué. Elles doivent donc, en conséquence, être réduites autant que possible.

Différents systèmes de test sont connus à ce jour, parmi lesquels on peut citer le générateur et compteur d'erreurs, qui est un dispositif distinct du modem, que l'on connecte à celui-ci et qui permet de faire transiter sur les liaisons une séquence déterminée de signaux ; cette séquence est soit analysée à l'autre extrémité de la ligne par un second dispositif générateur et compteur d'erreurs,

0025767

2

soit renvoyé sur la même ligne par le modem situé à l'autre extrémité de cette ligne, rebouclé sur lui-même. Cette solution présente différents inconvénients, notamment le coût du matériel de test, le manque de précision du diagnostic d'erreur lorsque n'est utilisé qu'un seul dispositif de test, et la nécessité d'avoir des opérateurs qualifiés et deux dispositifs de test, un à chaque extrémité de la liaison, lorsque la source d'erreurs doit être localisée plus précisément, c'est-à-dire lorsque l'on désire savoir si les erreurs proviennent du modem central, du modem périphérique ou encore de la ligne de transmission elle-même.

La présente invention a pour objet un procédé réalisant automatiquement, à partir de l'une des extrémités d'une liaison et par une commande unique, le test successivement du modem situé à cette extrémité, du modem situé à l'autre extrémité, et enfin de la ligne elle-même, et cela quel que soit le mode de fonctionnement de la liaison, sans intervention d'opérateur à l'autre extrémité. En outre, le déroulement du test est interrompu lorsqu'un défaut de fonctionnement est détecté, fournissant ainsi un diagnostic précis sur la localisation de ces défauts. Enfin, les différents ordres et informations nécessaires aux tests ou fournis par eux sont transmis d'un modem à l'autre sur un canal distinct de celui utilisé pour la transmission des données, le canal, la vitesse de transmission et la forme des informations étant choisis de façon telle que celles-ci restent utilisables en cas de mauvais fonctionnement des différents composants du système, permettant ainsi la réalisation des tests dans les conditions où ils sont les plus nécessaires.

Plus précisément, le procédé de test selon l'invention comporte principalement les étapes suivantes :

- le test de la fonction modulation-démodulation d'un premier modem, choisi comme origine du test, pendant une durée prédéfinie ;

- en cas de défauts de fonctionnement du modem origine, l'affichage d'une information indiquant la défaillance de ce modem et l'arrêt du déroulement du procédé ;

- en l'absence de défauts de fonctionnement pendant toute cette durée, le test de la fonction modulation-démodulation du modem situé à l'autre extrémité de la ligne de transmission, appelé modem extrémité, pendant une durée prédéfinie ;

- en cas de défauts de fonctionnement du modem extrémité, l'affichage sur le modem origine d'une information indiquant la défaillance et provoquant l'arrêt du procédé ;

- en l'absence de défauts de fonctionnement pendant toute la durée requise, le test de la ligne de transmission elle-même, dans les deux sens, également pendant une durée prédéfinie, et l'affichage sur le modem origine des éventuelles erreurs de transmission.

L'invention a également pour objet un dispositif, intégrés aux modems, mettant en oeuvre ce procédé.

D'autres objets, caractéristiques et résultats de l'invention ressortiront de la description suivante, donnée à titre d'exemple non limitatif et illustrée par les dessins annexés, qui représentent :

- la figure 1, le schéma du procédé de test selon l'invention ;

- la figure 2, le schéma d'un mode de réalisation du dispositif selon l'invention ;

- la figure 3, le détail de l'une des étapes du procédé illustré sur la figure 1.

Sur ces différentes figures, les mêmes références se rapportent aux mêmes éléments.

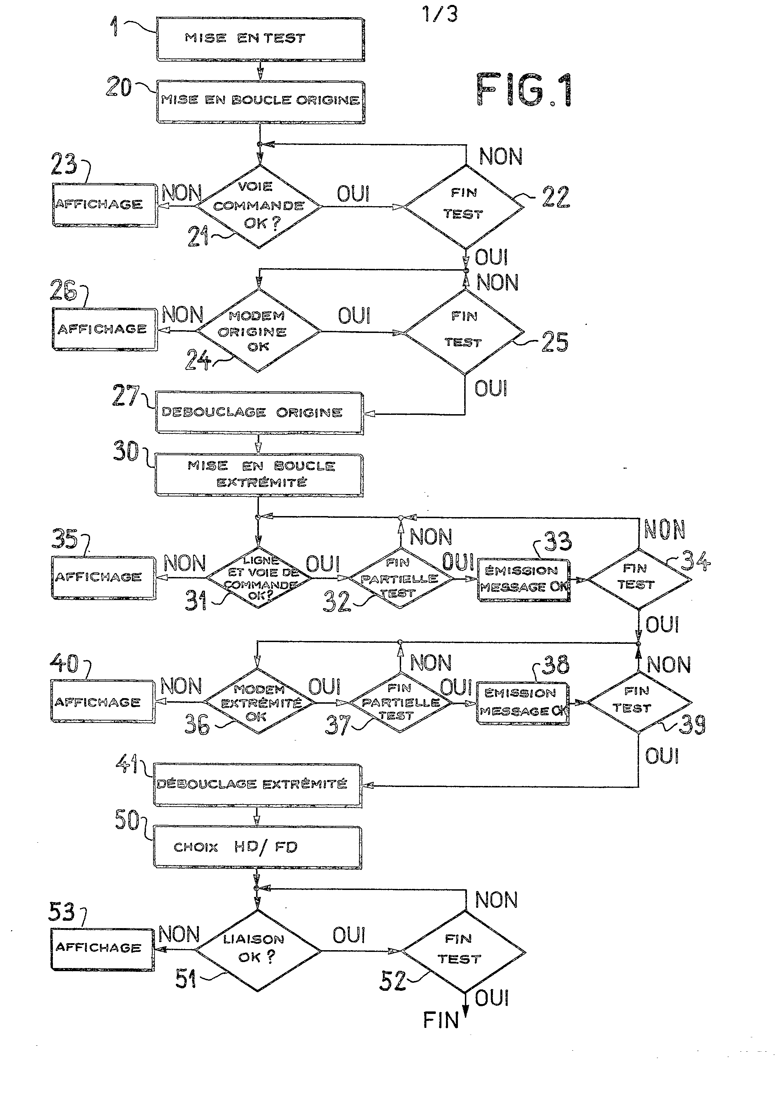

Le procédé décrit figure 1 commence par une étape, référencée 1, de déclenchement d'un test entre deux modems, l'un de ces modems étant par exemple relié à une unité centrale de traitement de données et l'autre modem étant relié à un des organes périphériques d'un système qui peut en comporter plusieurs. L'un quelconque des modems est choisi comme modem origine, à partir duquel est commandé le test et où viennent s'afficher les résultats, l'autre modem concerné par le test étant appelé modem extrémité ; les autres modems que peut comporter le système sont prévenus du test en cours lors de cette étape.

Le déclenchement du test s'effectue par l'émission par le modem origine d'un ordre de forme déterminée vers tous les autres modems du système ; le test n'est déclenché qu'après réception par le modem origine d'un accusé de réception positif, ou acquittement, émis par le modem extrémité. Les ordres mentionnés ci-dessus peuvent par exemple prendre la forme d'une série de bits constituée de trois parties : la première, sur $t$ bits, forme un message indiquant qu'il s'agit d'un ordre et peut être par exemple une suite de $t$ bits identiques ; la seconde partie est constituée par l'adresse du modem extrémité concerné, sur $u$ bits, et enfin la troisième partie sur $v$ bits, caractérise l'ordre concerné. L'ordre est de préférence précédé par un drapeau constitué par exemple par une série de bits égaux à 1, émis pendant une durée de l'ordre d'une seconde. L'acquittement a de préférence la même forme que l'ordre lui-même.

Par ailleurs, ces ordres de test sont émis sur un canal différent de celui qui est emprunté par les données elles-mêmes ; ce canal se situe de préférence en bas de la bande passante des modems et les échanges d'informations s'y effectuent à très basse vitesse, de l'ordre de la dizaine de Bauds, afin que les informations de test soient perturbées au minimum par une mauvaise qualité de la liaison.

Les étapes suivantes du procédé selon l'invention (références 20 à 27 sur la figure) concernent le modem origine.

L'étape 20 consiste en la déconnexion du modem origine de la ligne de transmission et le bouclage de ce modem sur lui-même, de façon à permettre le test de son fonctionnement propre.

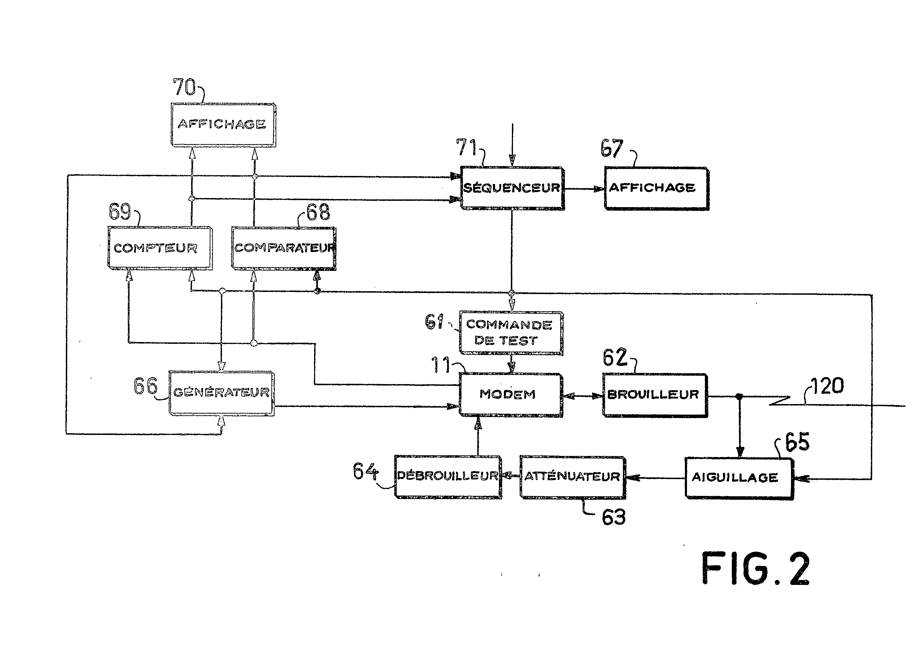

L'étape suivante (21) est rendue nécessaire lorsque, comme mentionné plus haut, les procédures de test se déroulent sur un canal séparé du canal de données : elle consiste à tester le fonctionnement de la voie de commande du modem origine. Ce test s'effectue à l'aide d'un ensemble de circuits décrits figure 2. Si le fonctionnement de cette voie de commande n'est pas correct, l'information correspondante est affichée (étape 23) et provoque l'arrêt du déroulement du test. Au contraire, dans le cas où la voie de commande fonctionne correctement, un dispositif de temporisation détermine si le test doit être repris ou non (étape 22) ; cette temporisation peut se faire par exemple par comptage du nombre de bits émis pour tester la voie de commande ; à titre d'exemple, le fonctionnement de la voie de commande peut être considéré comme correct si aucune erreur n'est détectée sur 10 000 bits de test, ce qui correspond, pour une fréquence de 2 400 Hz, à une durée d'environ 4 s.

A l'issue de ce test 22, qui détermine donc si la durée choisie pour le test 21 est atteinte (ou si le nombre de bits de test est atteint), c'est la fonction modulateur-démodulateur du modem origine, sur le canal emprunté par les données, qui est testée (étape 24). Pour ce test, de la même manière, lorsqu'un défaut de fonctionnement est détecté, l'information correspondante est affichée (étape 26) et provoque l'arrêt du déroulement du test. Lorsque au contraire aucune erreur n'est détectée, le test est repris autant de fois que nécessaire pour avoir une bonne probabilité de fonctionnement correct. Comme précédemment, lorsque le nombre d'itérations prédéfini est atteint (test 25), on passe à l'étape suivante (27), qui est la reconnexion du modem origine à la ligne de transmission, marquant la fin du test de celui-ci.

Les étapes suivantes (30 à 41) conernent le test en boucle fermé du modem extrémité. Ce test commence par la mise (étape 30) en boucle de ce modem, c'est-à-dire sa déconnexion de la ligne, avec reconnexion commandée par lui-même, en fin de test.

De façon analogue à l'étape 21 précédente pour le modem origine est alors effectué le test de la voie de commande du modem extrémité (étape 31). Contrairement à ce qui a été dit précédemment, la détection d'une erreur indique ici que soit la voie de commande, soit la ligne de transmission est défectueuse. Cette défectuosité est affichée (étape 35) sur le modem extrémité en cours de test. Dans le cas où n'est détectée aucune erreur, le test est repris comme précédemment après le passage par une étape de temporisation (ou de comptage) 32. Lorsque le nombre de bits désiré est atteint, le modem extrémité se reconnecte à la ligne et émet (étape 33) un message de bon fonctionnement à l'intention du modem origine. Si le modem origine ne reçoit pas un tel message, il affiche une information indiquant un mauvais fonctionnement qui se situe donc soit au niveau du modem extrémité, soit au niveau de la ligne. Comme précédemment, cette erreur arrête le déroulement du procédé.

Afin de donner plus de redondance à l'information de test, il est préférable d'insérer une seconde étape de temporisation (34) permettant de reprendre un certain nombre de fois le processus 31, 32, 33 qui vient d'être décrit. A titre d'exemple, si l'on choisit la même valeur pour l'étape de comptage 34 que pour les étapes 22 ou 25, à savoir 10 000 bits, la temporisation de l'étape 32 peut alors correspondre au comptage de 2 000 bits, ce qui conduit à l'émission de cinq messages de bon fonctionnement.

Après le test de la voie de commande du modem extrémité se déroule le test (étape 36) de la fonction de modulation-démodulation sur le canal des données, de façon analogue à l'étape 24. La détection d'un mauvais fonctionnement provoque l'affichage (étape 40) de l'information correspondante et arrête le déroulement du test. Au contraire, le bon fonctionnement du modem après des étapes de temporisation (37 et 39) et d'information du modem origine (38), analogues aux étapes 32, 34 et 33 respectivement décrites ci-dessus, conduit au débouclage du modem extrémité (étape 41) et à la fin du test de celui-ci.

Il est ensuite procédé au test de la liaison elle-même, qui commence, dans un mode de réalisation préféré, par une étape 50 correspondant au choix du mode de transmission dans lequel se déroulera le test, à savoir transmission en "full duplex" ou "half duplex". On rappelle que l'on entend par "half duplex", ou alternat ou semi duplex, un mode de fonctionnement dans lequel les modems utilisent leur ligne de transmission l'un après l'autre, et par "full duplex", ou duplex intégral, un fonctionnement dans lequel les modems peuvent utiliser la ligne en même temps, ceci étant rendu possible soit par l'attribution aux informations de bandes de fréquence différentes selon leur sens de parcours, soit par un dédoublement des liaisons électriques.

Dans cette étape 50, comme dans le reste du procédé, le même principe est retenu, à savoir la commande de tous les tests par le modem choisi comme origine ; comme, par ailleurs, surtout dans le cas d'un réseau multipoints, les deux modems concernés peuvent ne pas se trouver dans le même état de fonctionnement, il est fréquent que le modem relié à l'unité centrale fonctionne en "full duplex" alors qu'un certain nombre des modems reliés aux unités périphériques fonctionnent en "half duplex" ; dans ce dernier cas, la procédure de test doit se dérouler en "half duplex".

Cette étape (50) de choix peut s'effectuer par exemple de la façon suivante : - le modem origine teste tout d'abord son mode de fonctionnement "half duplex" ou "full duplex" et émet un ordre de test dans le mode de fonctionnement correspondant ;

- le modem extrémité qui reçoit cet ordre teste à son tour son état ;

- si le modem extrémité est également en "full duplex", il émet un acquittement pour un test en "full duplex", qui est, conformément à ce qui est dit plus haut, de la même forme que l'ordre reçu ; à la réception de l'acquittement par le modem origine, l'étape suivante est enchaînée ;

- lorsque le modem extrémité est en état "half duplex", il émet alors un acquittement pour un test en "half duplex", c'est-à-dire que la troisième partie de l'ordre mentionné plus haut indique que le test demandé doit se dérouler en "half duplex". De la même manière, à la réception de l'acquittement est enchaînée l'étape suivante.

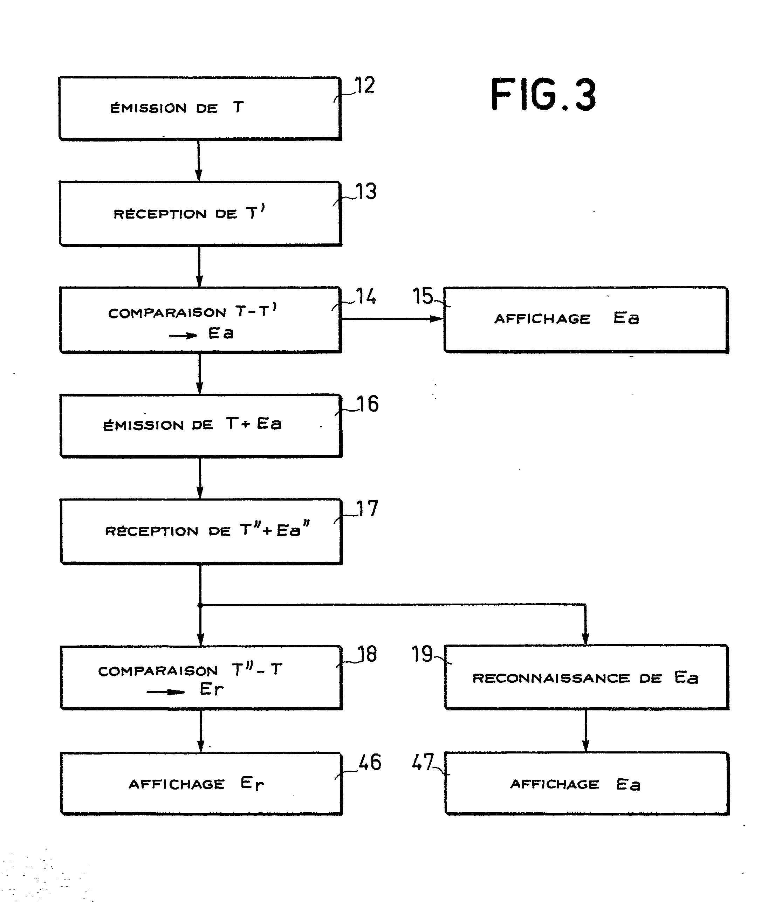

Cette étape suivante (51) consiste à tester la liaison elle-même, en mode "half duplex" ou "full duplex" selon ce qui a été déterminé précédemment. Un mode de réalisation de ce test est donné figure 3.

Dans le cas où une erreur est détectée, elle est affichée dans une étape 53 au niveau du modem origine. Dans le cas où aucune erreur n'est détectée, le test de la liaison est repris autant de fois qu'autorisé par une étape 52 de temporisation.

La figure 2 représente un mode de réalisation du dispositif selon l'invention.

Ce dispositif comporte au moins deux modems reliés par une voie de transmission de données, constituée par exemple par une ligne téléphonique. Sur la figure, seuls l'un des modems, à savoir sa partie modulateur-démodulateur (11), ses circuits électroniques associés (61 à 71) qui assurent la réalisation du procédé décrit précédemment, et la ligne de transmission (120) sont représentés, étant entendu que le modem situé à l'autre extrémité de la ligne est identique à celui qui est représenté, afin de satisfaire à l'un des principes de base de la présente invention, à savoir la banalisation des modems.

Le procédé selon l'invention commence par le déclenchement du test par une commande fournie à un séquenceur 71, qui a pour fonction le déclenchement temporisé des trois tests décrits précédemment et la commande en conséquence des divers circuits du dispositif. Le séquenceur 71 est relié à un dispositif d'affichage 67 qui indique celui des tests qui est en cours à chaque instant.

Pour la réalisation de l'étape 1 de la figure 1, le circuit modulateur-démodulateur 11 du modem est relié à un élément de commande 61 de mise en relation du modem origine avec un autre modem du réseau.

L'étape suivante du procédé de la figure 1 est le test du modem origine. Celui-ci se déroule en deux étapes : tout d'abord le test de la voie de commande (étape 21), puis le test de la fonction modulation-démodulation de la voie de données (étape 24). Dans un mode de réalisation, ces deux tests peuvent se dérouler de la même manière, à l'aide d'un ensemble de quatre circuits 62, 63, 64 et 65, et d'un générateur de signaux 66 : le séquenceur 71 commande au générateur 66 l'émission d'un message déterminé, constitué de préférence d'une suite de bits de même valeur, qui est modulé par le circuit 11 et dirigé vers une ligne d'atténuation 63, qui a pour fonction d'imposer au signal le maximum d'atténuation compatible avec le bon fonctionnement du modem. Le circuit 65 est un circuit d'aiguillage commandé par le séquenceur 71, permettant de relier lors de ce test le modem 11 à la ligne d'atténuation 63. Ce signal atténué est ensuite reçu par la partie démodulateur du circuit 11 et envoyé à un comparateur 68, commandé par le séquenceur 71, qui a pour fonction de comparer le message démodulé par le circuit 11 avec le message fourni par le générateur 66, et conservé dans un élément de mémoire appartenant par exemple au comparateur 68. Si celui-ci constate une identité suffisante, il envoie un message de bon fonctionnement au séquenceur 71, ce qui permet de passer à l'étape suivante du test. Au contraire, si le comparateur 68 décèle une différence entre message et message reçu, une information d'erreur est envoyée à un dispositif d'affichage 70, qui peut être distinct ou non du dispositif 67, ainsi qu'au séquenceur 71, afin de provoquer l'arrêt du procédé.

Par ailleurs, dans un mode de réalisation préféré, on interpose entre le modem 11 et la ligne d'atténuation 63 un dispositif brouilleur-débrouilleur 62 de type pseudo-aléatoire, qui a pour fonction de brouiller le signal émis par le modem d'une façon connue, auquel correspond un dispositif brouilleur-débrouilleur 64 autosynchronisable. En effet, ainsi qu'il est connu,l'insertion d'un brouillage dans un système de transmission permet d'utiliser des messages de test simples à engendrer et à reconnaître, sans se trouver placé de ce fait dans des conditions de transmission trop favorables.

Par ailleurs, dans une variante de réalisation, il est possible de procéder pour la voie de commande à un test simplifié. En effet, lorsque la voie de commande est séparée de la voie empruntée par les données, il a été indiqué ci-dessus qu'il est préférable d'utiliser le bas de la bande passante des modems à une vitesse très faible, de l'ordre de la dizaine de Bauds ; dans ce cas, le test peut consister simplement à vérifier que, lorsqu'on émet une série finie de bits de même valeur, on obtient effectivement après modulation et démodulation la présence des deux états, zéro et un du signal.

Ainsi qu'il est dit ci-dessus, lorsque le comparateur 68 ne détecte aucune erreur dans cette étape, il transmet un signal au séquenceur 71 qui lui permet de passer au test suivant, à savoir le test du modem extrémité.

Comme pour le modem origine, cette étape se décompose en test de la voie de commande elle-même puis en test de la voie des données ; cette étape se déroule de la même manière, à une exception près qui concerne l'information du modem origine d'une éventuelle défaillance de fonctionnement.

On suppose dans ce cas, pour la clarté de l'exposé, que le modem illustré figure 2 est le modem extrémité. Il reçoit donc par l'intermédiaire de la liaison 120 un message de test lui ordonnant une mise en boucle sur lui-même (étape 30 de la figure 1), puis le test successivement de la voie de commande et de la voie de données. A titre d'exemple, on décrit ci-après le test de la voie de données.

Le modem origine émet alors un message de test constitué de préférence comme précédemment d'un ensemble de bits de même valeur transmis par la voie 120, éventuellement et pour les mêmes raisons que précédemment, par l'intermédiaire de deux dispositifs brouilleur-débrouilleurs tels que 62. Après démodulation, le modem 11 transmet le message au comparateur 68, qui détermine si le message reçu est identique ou non au message de test. Comme précédemment, cette opération est réitérée un certain nombre de fois, les itérations étant par exemple comptées par un compteur 69, commandé par le séquenceur 71. Au bout d'un certain nombre d'itérations montrant un fonctionnement correct, il est envoyé au modem origine un message indiquant l'absence d'erreur au niveau du modem extrémité. Dans l'exemple décrit précédemment, la durée totale du test est de l'ordre de $10^4$ bits, la durée de l'itération dont il est question ici est de 2 000 bits et le modem origine doit recevoir 5 messages de fonctionnement correct. L'absence de l'un de ces messages se traduit au niveau du modem origine par un signal à destination du dispositif d'affichage 70 et du séquenceur 71 pour arrêt du procédé. Lorsque le test s'est entièrement déroulé de façon satisfaisante, le compteur 69 du modem origine envoie un message au séquenceur 71 de ce même modem origine, le séquenceur ordonnant l'étape suivante, à savoir le débouclage du modem extrémité (étape 41 sur la figure 1) puis lancement du test de la liaison elle-même par l'étape 50 (figure 1) du choix du mode de liaison décrit ci-dessus, et enfin le test de la liaison elle-même (étape 51 figure 1) dont un mode de réalisation est décrit figure 3, en relation avec la figure 2.

La première étape du procédé décrit figure 3, effectuée immédiatement après le choix du mode de transmission "half" ou "full duplex", est illustrée par un bloc 12 sur la figure. Elle consiste en l'émission d'un message prédéfini, appelé T, par le modem choisi comme origine du test. En se reportant à la figure 2, on voit que cette émission est réalisée par le générateur 66 sur commande du séquenceur 71, la forme du message T pouvant être par exemple mémorisée dans un élément de mémoire appartenant au séquenceur 71.

L'étape suivante, repérée 13 sur la figure, consiste en la réception du message T par le modem extrémité ; ce message reçu est appelé T' et, suivant que la transmission s'est effectuée sans ou avec erreur, il est ou n'est pas identique à T.

L'étape suivante, repérée 14 sur la figure, consiste pour le modem extrémité à effectuer la comparaison du message T' qu'il a reçu avec le message T qui a été émis, grâce au comparateur 68 de la figure 2. Le modem en déduit l'existence ou la non existence d'une erreur de transmission dans le sens modem origine vers modem extrémité, c'est-à-dire une erreur aller. Cette information est appelée $E_a$.

Dans un mode de réalisation, cette information $E_a$ est affichée (étape 15) sur l'afficheur 70 du modem extrémité.

Parallèlement à cet affichage, le modem extrémité émet vers le modem origine un message comportant le message T précédent accompagné d'un message représentant l'erreur $E_a$ (étape 16). Dans le dispositif de la figure 2, l'information de sortie du comparateur

12

est dirigée d'une part vers le séquenceur 71 afin qu'il fournisse le signal T au générateur 66 et, d'autre part, vers le générateur 66 pour l'émission du message représentant $E_a$.

L'étape suivante, repérée 17, est la réception par le modem origine du message émis dans l'étape précédente, le message reçu étant référencé $T''+E_a''$. Ce message est traité de deux façons :

- d'une part (étape 18 sur la figure), le modem origine effectue la comparaison (comparateur 68 de la figure 2) du message T'' reçu avec le message T et il en déduit, comme précédemment le modem extrémité (étape 14), l'existence ou la non-existence d'erreurs de transmission dans le sens modem extrémité vers modem origine. Cette information, appelée erreur retour, est notée $E_r$. Elle est affichée (afficheur 70 de la figure 2) sur le modem origine : c'est l'étape repérée 46 ;

- d'autre part (étape 19), le modem origine effectue une interprétation du message $E''_a$ reçu, parce que ce dernier est susceptible d'être entaché d'erreurs, afin de reconstituer le message $E_a$ initial ; celui-ci est afors affiché (étape 47) sur le modem origine. L'étape 19 est réalisée par exemple sur commande du séquenceur 71 par comptage des bits ayant une certaine valeur, par le compteur 69. C'est alors l'information de sortie du compteur qui est dirigée vers l'afficheur 70 pour réaliser l'étape 47.

Dans l'un ou l'autre cas, l'information affichée est également dirigée vers le séquenceur 71 pour lui indiquer la fin du test.

A titre d'exemple, les signaux utilisés pour ce test peuvent être les suivants :

- pour le message T, une suite de bits de même valeur, par exemple 1 ; dans le cas d'un test en "half duplex", il s'agit d'un nombre N limité de bits, par exemple N = 50 : dans le cas d'un test "full duplex", il s'agit d'une suite de bits ininterrompue pendant toute la durée du test ;

- pour le message $E_a$, dans le cas d'un test en "half duplex", il s'agit de préférence d'une suite de n bits émise par le modem extrémité, suivant immédiatement le message T, de même valeur que celui-ci

13

lorsqu'il n'y a pas d'erreur de transmission dans le sens aller, et la valeur opposée dans le cas contraire. Lorsque le comparateur 68 (figure 2) du modem origine détecte une erreur, c'est-à-dire dans l'exemple choisi un bit égal à zéro, le compteur 69 en compte le nombre $\underline{a}$ et si $\underline{a}$ est supérieur à n/2, on en déduit qu'il s'agit d'une erreur aller.

Dans le cas d'un test en "full duplex", une erreur de transmission dans le sens aller se traduit par l'émission par le modem extrémité de M bits de valeur opposée à celle du signal T, à savoir M bits égaux à zéro dans l'exemple ci-dessus ; d'une façon analogue à ce qui est dit ci-dessus, lorsque le comparateur 68 du modem origine détecte une erreur, le compteur 69 en compte le nombre $\underline{b}$ et si $\underline{b}$ est supérieur à M/2, on en déduit qu'il s'agit d'une erreur aller.

Il apparaît ainsi que la source des erreurs peut être détectée même en cas de liaison très fortement dégradée, du fait du très fort taux d'erreur admissible (50 %).

Il a été ainsi décrit un test automatique d'un système constitué par une ligne de transmission reliée à au moins deux modems, permettant de vérifier successivement le bon fonctionnement de chacun des modems puis de la ligne elle-même, fournissant une localisation précise d'un éventuel défaut de fonctionnement même en cas de liaison fortement perturbée, et cela à partir de l'un quelconque des modems, qu'il s'agisse d'une liaison point à point, c'est-à-dire ne comportant qu'une unité centrale et une unité périphérique, ou une branche particulière d'une liaison multipoint. Par ailleurs, ce test met en oeuvre, autour du modulateur-démodulateur lui-même, un ensemble de circuits aisément intégrables à ce dernier.

# REVENDICATIONS

1. Procédé de test automatique d'un système de transmission de données numériques, comportant au moins deux modems (11) reliés par une ligne de transmission (12), caractérisé par le fait que les informations relatives audit procédé sont transmises sur un canal de commande distinct de celui utilisé pour la transmission des données et que le procédé comporte les étapes suivantes :

- un premier test (24) concernant la fonction modulation-démodulation de l'un des modems, choisi comme origine du test et appelé modem origine, pendant une durée prédéfinie ;

- lorsque le test précédent fournit une information de fonctionnement défectueux, l'affichage (26) de cette information provoquant l'interruption du déroulement du procédé ;

- lorsque le premier test indique un fonctionnement correct, un deuxième test (36) concernant la fonction modulation-démodulation du second modem, appelé modem extrémité ;

- lorsque le deuxième test indique un fonctionnement correct, un troisième test (51) concernant la ligne dans les deux sens de transmission et l'affichage (53) des éventuelles erreurs dans la transmission sur le modem origine.

2. Procédé selon la revendication 1, caractérisé par le fait qu'il comporte de plus, avant les premier et deuxième tests, un test (21, 31) de la voie de commande respectivement du modem origine et du modem extrémité.

3. Procédé selon l'une des revendications précédentes, caractérisé par le fait que le canal de commande est constitué par une bande de fréquence plus basse que la bande de fréquence constituant le canal emprunté par les données, et que les informations relatives audit procédé sont transmises à une vitesse très inférieure à la vitesse de transmission des données.

4. Procédé selon l'une des revendications précédentes, caractérisé par le fait que les ordres de test comportent trois parties, comportant chacune un nombre déterminé de bits : une partie étant utilisée pour l'identification d'un ordre de test ; une deuxième partie fournissant l'adresse du modem extrémité, et une troisième partie explicitant l'ordre considéré.

5. Procédé selon l'une des revendications précédentes, caractérisé par le fait que les premier et second tests (24, 36) consistent chacun en l'émission d'un message de test déterminé par le modem concerné (11), l'atténuation de ce message,la réception de ce message par le même modem et la comparaison du message reçu au message émis, d'où sont déduites les informations de fonctionnement défectueux ou correct.

6. Procédé selon l'une des revendications précédentes, caractérisé par le fait que le troisième test (51) comporte les étapes suivantes :

- l'émission (12) d'un message de test prédéfini (T) par le modem origine vers le modem extrémité ;

- la comparaison(14) par le modem extrémité du message reçu (T') avec le message émis, fournissant une information ($E_a$) représentant l'existence ou la non existence d'erreurs de transmission dans le sens modem origine vers modem extrémité, dite information d'erreur aller ;

- l'émission (16) par le modem extrémité du même message de test (T) et d'un second message, contenant l'information d'erreur aller ($E_a$) ;

- la comparaison (18) par le modem origine du message reçu (T") avec le message de test, fournissant une information représentant l'existence ou la non existence d'erreurs de transmission dans le sens modem extrémité vers modem origine, dite information d'erreur retour ($E_r$) ;

- la reconnaissance (19) de l'information erreur aller ($E_a$) à partir du message reçu par le modem origine.

7. Procédé selon la revendication 6, caractérisé par le fait qu'il comporte en outre une phase préliminaire de détermination du mode de transmission des informations relatives au test, comportant les étapes suivantes :

- test de l'état "half duplex" ou "full duplex" du modem origine ;

- émission par le modem origine d'un ordre de test en mode "half duplex" ou "full duplex" respectivement ;

- réception de l'ordre par le modem extrémité et test de son propre état ;

- émission d'un acquittement par le modem extrémité, déclenchant un test en "full duplex" seulement dans le cas où les deux modems sont dans cet état.

8. Dispositif de test automatique d'un système de transmission de données numériques, comportant au moins deux modems (11) reliés par une ligne de transmission (12), assurant la mise en oeuvre du procédé selon l'une des revendications précédentes, caractérisé par le fait que chacun des modems comporte au moins :

- des moyens assurant la modulation et la démodulation des informations sur le canal des données et sur le canal de commande ;

- des moyens de comparaison (68) d'un signal reçu par les moyens précédents à un signal de référence ;

- des moyens de comptage (69) des bits ayant une valeur prédéfinie ;

- des moyens de séquence et de commande (71) des tests, assurant l'enchaînement des trois tests et l'émission des ordres correspondants ;

- des moyens d'atténuation (63) d'un signal ;

- des moyens d'affichage (70).

FIG.1

0025767

1/3

**FIG.2**

0025767

# FIG.3

```
┌─────────────────────┐ 12
│  ÉMISSION  DE   T    │
└─────────────────────┘
          │
          ▼
┌─────────────────────┐ 13
│  RÉCEPTION  DE  T'   │
└─────────────────────┘
          │
          ▼
┌─────────────────────┐ 14      15 ┌─────────────────────┐
│ COMPARAISON  T-T'    │──────────▶│   AFFICHAGE    Ea    │
│        ──▶  Ea       │           └─────────────────────┘
└─────────────────────┘
          │
          ▼
┌─────────────────────┐ 16
│  ÉMISSION  DE  T+Ea  │
└─────────────────────┘
          │
          ▼
┌─────────────────────┐ 17
│ RÉCEPTION  DE T"+Ea" │
└─────────────────────┘
          │
          ├──────────────────────────────────┐
          ▼                                   ▼
┌─────────────────────┐ 18      19 ┌─────────────────────┐
│ COMPARAISON   T"- T  │           │ RECONNAISSANCE DE Ea │
│        ──▶   Er      │           └─────────────────────┘
└─────────────────────┘                       │
          │                                    ▼
          ▼                          47 ┌─────────────────────┐
┌─────────────────────┐ 46           │   AFFICHAGE    Ea    │
│   AFFICHAGE    Er    │              └─────────────────────┘
└─────────────────────┘
```

| Catégorie | Citation du document avec indication, en cas de besoin, des parties pertinentes | Revendication concernée |
|---|---|---|
| | **DOCUMENTS CONSIDERES COMME PERTINENTS** | |
| | FR - A - 2 404 970 (S.F.E.N.A.)<br><br>* Page 2, lignes 7-10; page 5, ligne 17 - page 7, ligne 2, lignes 31-35; figure 4 *<br><br>-- | 1 |
| | DE - A - 2 824 578 (MILGO)<br><br>* Page 9, premier alinéa; page 10, lignes 4-14; page 11, lignes 1-3; page 12, dernier alinéa; page 13, lignes 6-10; ligne 18 - dernière ligne; page 18, lignes 7-13; page 23, dernier alinéa - page 24, ligne 2; page 26, lignes 6-19 *<br><br>-- | 1,3,4 |
| | US - A - 4 039 751 (COUTURIER et al.)<br><br>* Colonne 4, lignes 18-27 *<br><br>-- | 5 |
| | FR - A - 2 317 829 (SIEMENS)<br><br>* Page 1, ligne 27 - page 2, ligne 11, page 5, lignes 12-31; page 6, lignes 9-36 *<br><br>-- | 6,8 |
| | US - A - 3 786 187 (DE VITA et al.)<br><br>* Colonne 2, lignes 18-29; colonne 3, lignes 13-27; colonne 4, ligne 53 - colonne 5, ligne 40; lignes 51-55 *<br><br>---- | 6 |

**CLASSEMENT DE LA DEMANDE (Int. Cl. 3)**

H 04 L 1/24

**DOMAINES TECHNIQUES RECHERCHES (Int. Cl. 3)**

H 04 L 1/24
1/12
5/14

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-12-1980 | HOLPER |

OEB Form 1503.1  06.78